# DEMANDE DE BREVET EUROPEEN

(11) **EP 4 656 269 A1**
(43) Date de publication de la demande: **03.12.2025**
(21) Numéro de dépôt: 25177784.3
(22) Date de dépôt: 20.05.2025
(51) Int. Cl.: B01D 45/12, B01D 45/16, B01D 53/26, H01M 8/04119

(54) **SÉPARATEUR EAU-GAZ À CIRCULATION TANGENTIELLE, PROCÉDÉ D'ASSEMBLAGE DU SÉPARATEUR ET UTILISATION D'UN COUVERCLE AVEC CONDUIT DE SORTIE PORTANT UNE GOUTTIÈRE DANS UN TEL SÉPARATEUR**

(30) Priorité: 31.05.2024 FR 2405682
(71) Demandeur: Purflux Filtration, 78280 Guyancourt (FR)
(72) Inventeur: HIRARD, Sylvain, 14250 TILLY SUR SEULLES (FR)
(74) Mandataire: Plasseraud IP

(57) **Abrégé**

Le séparateur eau-gaz pour pile à combustible inclut un boîtier avec couvercle muni d'un conduit (4) de la sortie qui porte un rebord externe, annulaire. La sortie (S) est en communication avec une chambre de séparation où est réalisée une circulation tangentielle du flux gazeux à épurer (F1), autour du conduit, l'eau séparée tombant sur le fond (2a). Le rebord externe, formant une gouttière (6), est disposée autour d'une extrémité (4b) inférieure du conduit (4). Ainsi, depuis une entrée latérale, la circulation tangentielle est réalisée autour du conduit (4) central définissant un axe longitudinal (X), en partie dans une zone axialement délimitée entre la gouttière et une partie radiale d'obturation, appartenant au couvercle (3), depuis laquelle le conduit (4) fait saillie vers le bas dans la chambre. Le rebord externe contribue à accélérer la rotation du flux et empêche l'eau coulant le long du conduit de rejoindre le flux épuré.

## Description

### Domaine technique

La présente divulgation relève du domaine des circuits utilisés dans des équipement à piles à combustible, notamment des dispositifs séparateurs d'impuretés liquides permettant de purifier un flux gazeux déchargé d'une pile à combustible. L'invention concerne plus particulièrement un dispositif de séparation d'eau liquide dans un flux de gaz d'hydrogène (H2) ou d'air circulant de façon tangentielle, ainsi qu'un procédé d'assemblage d'un séparateur d'eau avec amenée de flux tangentiel pour circuit de pile à combustible. Il est aussi proposé une utilisation d'un couvercle intégrant un rebord externe annulaire sur le conduit de sortie d'un séparateur pour prévenir/limiter des phénomènes de réentraînement d'eau.

### Arrière-plan technologique

Pendant le fonctionnement d'une pile à combustible, des sous-produits tels que de l'eau et de l'azote, ainsi que de l'hydrogène non consommé, peuvent se former du côté de l'anode de la pile. Dans certains systèmes connus, l'accumulation d'eau est contrôlée afin d'éviter une réduction des performances de la pile à combustible et/ou l'arrêt du système. Une approche connue consiste à libérer l'eau par un passage en aval de la pile à combustible. Les sous-produits peuvent être recirculés de telle sorte que l'hydrogène non consommé soit renvoyé du côté anode de l'empilement de piles à combustible. La recirculation peut également être utilisée pour humidifier le côté anode afin de favoriser une conversion chimique efficace et de prolonger la durée de vie de la membrane de la pile. Toutefois, il peut être nécessaire d'éliminer l'eau liquide contenue dans le flux de recirculation, telle que des gouttelettes, afin d'éviter que l'eau ne se bloque dans les canaux du champ d'écoulement de l'empilement de piles à combustible ou dans un éjecteur et également pour protéger les pales du compresseur.

Les séparateurs d'eau traditionnels sont dotés de voies d'écoulement, de tamis et/ou de mailles qui entraînent les gouttelettes d'eau séparées par une surface d'impaction en vue d'éliminer efficacement cette eau. Cependant, la conception de ces dispositifs conventionnels entraîne une perte de charge relativement importante dans le système pour un volume donné du dispositif de séparation.
On connaît, par le document US 20140377675 A1, un mode tangentiel de circulation qui peut permettre de limiter les effets de chute de pression, en permettant tout de même d'éliminer les plus grosses gouttelettes.
Par ailleurs, un dispositif séparateur en ligne est connu du document US 6475256, lequel propose de scinder en deux la chambre d'un cyclone par utilisation d'une cloison de séparation à effet déflecteur. La cloison force le flux en tourbillon, amené par une ouverture d'entrée radiale, à longer la paroi externe du cyclone avant de converger vers le centre du compartiment inférieur délimité par le déflecteur. Avec cette compartimentation, le flux descendant le long de la paroi externe peut déverser verticalement les gouttelettes en périphérie du compartiment intérieur et permettre un écoulement dans une large conduite de raccordement à un réservoir servant à récupérer de l'huile, tandis que le gaz peut se rediriger au centre et rejoindre une cheminée centrale traversant le déflecteur et formant une sortie supérieure, pour un écoulement ascendant du flux gazeux épuré. Ce type de cloisonnement engendre des pertes de charge significatives, de sorte qu'il n'est pas compatible avec des débits élevés passant par l'ouverture d'entrée radiale.

Il existe une marge de progression afin de limiter la perte de charge d'une part, et les quantités d'eau évacuées par la sortie d'autre part, dans des dispositifs de séparation eau-gaz pour circuit de décharge d'un flux gazeux issu d'une pile à combustible, sans complexification excessive. Dans tout ce qui suit la terminologie « hydrogène » doit se comprendre comme la molécule gazeuse de formule H₂.

### Résumé

La présente divulgation vient améliorer la situation.

A cet effet, il est proposé un dispositif de séparation de liquide, en particulier d'eau, pour flux gazeux d'un circuit de pile à combustible, le dispositif comprenant un boîtier délimitant un volume intérieur qui inclut ou correspond à une chambre de séparation, le dispositif comprenant :
- un composant de boîtier, pourvu d'une paroi latérale (qui s'étend par exemple depuis un fond du boîtier ou depuis une base) formée autour d'un axe central ;
- une surface d'impaction, latérale, délimitant la chambre de séparation ;
- une partie d'obturation, de préférence réalisée sous forme d'un couvercle, et permettant de recouvrir un dessus de la paroi latérale, le composant de boîtier et la partie d'obturation appartenant au boîtier ;
- un organe de cloisonnement qui inclut une plaque avec plusieurs orifices pour délimiter la chambre de séparation par le bas, de sorte que la chambre de séparation forme un compartiment supérieur dans le volume intérieur ;
- un compartiment inférieur prévu entre le fond et l'organe de cloisonnement (typiquement pour permettre une accumulation d'eau), sous le compartiment supérieur ;
- une entrée, pour amener un flux gazeux brut de façon tangentielle dans la chambre de séparation, de préférence perpendiculairement à l'axe longitudinal, et une sortie, l'entrée et la sortie étant prévues dans le boîtier;
dans lequel la partie d'obturation porte ou comporte un conduit définissant la sortie, le conduit communiquant avec le compartiment supérieur par un débouché axial en étant orienté vers le fond, en faisant saillie intérieurement par rapport à la partie d'obturation, le conduit incluant/portant une collerette ou gouttière, laquelle définit un rebord en saillie radialement vers l'extérieur par rapport au conduit en étant disposée autour d'une extrémité inférieure du conduit ou formée sur une circonférence extérieure du conduit en position adjacente à l'extrémité inférieure du conduit.

Avec ces dispositions, il est permis de cumuler les avantages d'une séparation qui élimine efficacement l'eau avec les avantages d'un mode de circulation tangentielle, limitant la perte de charge sachant que l'entrée du boîtier (à débouché intérieur latéral dans la chambre) communique latéralement avec le compartiment supérieur par un tronçon de l'entrée situé plus haut que le débouché axial du conduit et plus haut que la collerette ou gouttière.
Le dispositif favorise la circulation vers l'extérieur en flux tangentiel, sans entraver la chute des gouttelettes sur l'extérieur mais en ayant un effet de gouttière/barrière en bas du conduit, typiquement sur la circonférence de ce conduit, ce qui est compatible avec un fonctionnement sans perte de charge excessive. La surface d'impaction peut être formée, pour tout ou partie, par la paroi latérale. La surface d'impaction peut être formée par la paroi latérale et/ou un élément (composant de revêtement ou inséré dans le volume intérieure) recouvrant intérieurement la paroi latérale.

Le conduit peut faire saillie axialement (vers le bas par rapport à une zone de liaison avec la partie d'obturation) vers une région centrale du fond, typiquement en restant axialement espacé d'une partie centrale, de préférence non ajourée, de la plaque.
L'extension radiale de la collerette ou gouttière peut être supérieure à 5 ou 6 mm, par exemple au moins égale à 7 mm, et inférieure à 10 ou 12 mm. Bien entendu la collerette ou gouttière radialement est espacée de la surface d'impaction, par exemple espacée d'une distance radiale au moins supérieure au double ou au triple de l'extension radiale de la collerette/gouttière. L'espacement minimum par rapport à la surface d'impaction, formant une périphérie/circonférence extérieure de la chambre de séparation peut ainsi dépasser 15 ou 25 mm par exemple.

La collerette permet un effet de déviation et d'écartement entre le débouché axial de la sortie et une zone d'écoulement des gouttelettes liquides, avec aussi un effet de retenue des gouttelettes pouvant être formées le long du conduit. Cela permet aux gouttelettes de liquide de tomber plus à l'extérieur dans la chambre de séparation. Cela peut contribuer efficacement à :
- empêcher ou limiter le réentraînement de gouttelettes d'eau vers la sortie, qui n'ont pas suivi une trajectoire rotative/tangentielle autour du conduit (mais au contraire ont percuté ce conduit) ;
- obtenir un effet d'accélération du/des tourbillon(s) autour du conduit, avec optimisation de la séparation par impact des gouttelettes sur la surface d'impaction formée par la paroi latérale (pouvant appartenir au boîtier) qui délimite la chambre de séparation par l'extérieur.

Dans certaines réalisations, la collerette ou gouttière, de préférence raccordée sur l'entière circonférence du conduit, est non ajourée et/ou imperméable à l'eau.
Dans des formes de conception, la collerette ou gouttière inclut l'une et/ou l'autre des particularités suivantes :
- elle est conçue en matériau plastique, par exemple en résultant d'un moulage en une seule pièce.
- elle est agencée pour rallonger le conduit, avec une liaison ou contact axial contre un bord axial du conduit prévu à l'extrémité inférieure du conduit.
- un épaulement de la collerette ou gouttière est formé pour permettre une liaison et/ou contact axial contre le conduit, par le dessous.
- elle est de forme plate, en étant optionnellement pourvue d'un ou plusieurs moyens clippages sur une circonférence intérieur de la collerette ou gouttière.
- elle présente un creux central dont le diamètre intérieur est sensiblement égal (typiquement égal) à un diamètre interne du conduit.

Selon une particularité, la collerette ou gouttière est pourvue d'une surface annulaire, en regard de la plaque, qui s'étend radialement jusqu'à un bord externe en remontant en direction dudit bord externe, de préférence en ayant ladite surface annulaire qui remonte progressivement au fur et à mesure qu'on s'approche dudit bord externe. Indépendamment ou en complément, sur la collerette ou gouttière, un dessus ou une surface annulaire d'orientation opposée au fond (et typiquement à la plaque) peut être prévue avec une gorge annulaire ou des creusements/concavités.
Dans certaines options, un dessus de la collerette ou gouttière peut former une pente descendante vers le bord externe, par exemple en prévoyant une forme tronconique dans la collerette ou gouttière.

Le boîtier peut présenter un couvercle formant un composant supérieur moins haut que le premier composant de boîtier. Plus généralement, le boîtier peut être réalisé selon différentes conceptions permettant de délimiter un volume intérieur de façon étanche. Dans des réalisation du boîtier du dispositif de séparation, il peut être prévu au moins l'une des particularités suivantes :
- l'entrée débouche dans le volume intérieur par un débouché radial permettant une circulation tangentielle du flux gazeux dans une zone supérieure du volume intérieur ;
- l'entrée est délimitée par un conduit coudé.
- le conduit, préférentiellement coudé, permet de réaliser une admission du flux gazeux par le bas, à l'opposé de l'orientation de la sortie qui fait ressortit le flux épuré par le haut.
- la paroi latérale s'étend depuis un fond jusqu'à une extrémité annulaire disposant d'une ouverture (ouverture plus large que la section de passage du conduit).
- la partie d'obturation permet de recouvrir l'extrémité annulaire pour fermer l'ouverture formée à l'extrémité annulaire (extrémité supérieure axialement opposée au fond).
- le débouché radial est au moins en partie formé dans/délimité par la partie d'obturation ou formé adjacent à la partie d'obturation.
- la partie d'obturation peut présenter un creusement, adjacent au conduit, permettant de délimiter tout ou partie de la section de passage du débouché radial de l'entrée dans le volume intérieur (compartiment supérieur).
- le débouché radial est au moins en partie formé dans une projection ou excroissance de la partie d'obturation ou adjacent à la partie d'obturation, la partie d'obturation étant conçue et agencée pour permettre, au moins sur un secteur angulaire de 180° autour d'une portion intérieure du conduit, d'augmenter progressivement la hauteur ou distance axiale entre la collerette ou gouttière et la partie d'obturation au fur et à mesure qu'on s'approche du débouché radial/qu'on s'approche d'un secteur angulaire incluant le débouché radial de l'entrée.

Le dispositif permet de collecter de l'eau, dans le compartiment inférieur prévu sous l'organe de cloisonnement, avec par exemple une plaque qui s'étend perpendiculairement à l'axe central/vertical du dispositif pour éviter ou limiter le risque qu'un à-coup (en position monté du dispositif dans un véhicule, par exemple un véhicule roulant) provoque une remontée trop importante d'eau dans le compartiment supérieur.
La plaque peut présenter des orifices ayant une section de passage avec un diamètre qui est compris entre 3 et 6 mm, de préférence entre 3,4 et 5,5 mm. Cette taille, très inférieure à 1 cm favorise un effet anti-retour.

Dans des réalisations du dispositif, la plaque peut être plus large que le conduit, de préférence en recouvrant la totalité du fond, et/ou et une ou plusieurs des dispositions suivantes sont prévues :
- le débouché axial a un diamètre D4 qui peut optionnellement correspondre à un diamètre du conduit, ce dernier étant typiquement rectiligne.
- la partie centrale de la plaque, qui est une partie non ajourée, est traversée par l'axe central et présente un diamètre d5.
- la relation suivante est satisfaite : 1/2 < d5/D4 < 1.
- la plaque est à surface supérieure sensiblement convexe ou est bombée vers le haut, de sorte que la partie centrale (qui est non ajourée), est plus haute qu'une portion de marge annulaire de la plaque.

Dans diverses conceptions de la sortie, portée par la partie d'obturation, une ou plusieurs des dispositions suivantes s'appliquent :
- par rapport à une surface extérieure (latérale) cylindrique du conduit, la collerette ou gouttière a une extension radiale, mesurée perpendiculairement à l'axe central, qui peut être supérieure à une épaisseur du conduit et/ou supérieure ou égale à 6 mm.
- la section de passage du conduit est sensiblement constante.
- le collerette ou gouttière forme un embout du conduit, recouvrant un bord axial inférieur du conduit.
- le conduit définissant la sortie est un conduit cylindrique, rigide, permettant une circulation de fluide ascendante.
- le conduit et la collerette (ou gouttière) sont espacés de la plaque.
On comprend que la collerette ou gouttière peut être disposée sensiblement à mi-hauteur, dans un espace délimité de façon cylindrique ou tubulaire (à section sensiblement constante) par la surface d'impaction, avec la plaque qui peut s'étendre dans le bas de cet espace. Plus généralement, la plaque peut être sensiblement aussi large que la chambre de séparation.

Selon une particularité, le boîtier du dispositif porte ou comprend un conduit rigide extérieur, pour une première circulation ascendante du flux gazeux en amont de la chambre de séparation. Ce conduit rigide extérieur fait partie de l'entrée et peut s'étendre plus bas que la plaque ou plus bas que le fond du premier composant de boîtier. Le conduit rigide de l'entrée et le conduit définissant la sortie peuvent être des conduits rectilignes, avec le conduit de l'entrée décalée latéralement par rapport à l'axe central. Optionnellement, on prévoit l'une ou plusieurs des particularités suivantes :
- le conduit pour la première circulation ascendante forme un premier tronçon de l'entrée, parallèlement à l'axe central, tandis que le tronçon de l'entrée communiquant latéralement avec le compartiment supérieur forme/est un deuxième tronçon de l'entrée qui complète ledit premier tronçon.
- le deuxième tronçon est agencé transversalement par rapport à l'axe central (A).
- le conduit définissant la sortie est un conduit cylindrique, rigide, pour une deuxième circulation ascendante du flux gazeux en aval de la chambre de séparation, en s'étendant autour d'un axe longitudinal parallèle ou confondu avec l'axe central, ce grâce à quoi la deuxième circulation ascendante est parallèle à la première circulation ascendante en démarrant depuis le débouché axial qui se situe entièrement plus bas que le deuxième tronçon.

Le dispositif de séparation peut avoir une structure de filtre en ligne avec l'entrée et la sortie qui permettent des raccordements à deux extrémités axiales opposées du dispositif.

L'un parmi un média filtrant métallique, un coalesceur, un média sous forme de toile (par exemple hydrophobe) peut être prévu dans la chambre de séparation en entourant le conduit et en rejoignant axialement ou en jouxtant l'organe de cloisonnement. Cet élément peut recouvrir une face interne du premier composant, en formant la surface d'impaction. Dans des options, la surface d'impaction peut être hétérogène, avec par exemple au moins un tronçon annulaire rigide formé par la face interne du boîtier (par le premier composant, typiquement) et un tronçon annulaire formé par un revêtement ou élément de recouvrement d'un tronçon annulaire complémentaire.
Lorsqu'un tel élément de recouvrement est prévu, il peut être placé entièrement au-dessus de l'organe de cloisonnement.

Selon un autre aspect, il est proposé un procédé d'assemblage d'un dispositif de séparation de liquide, en particulier d'eau, qui permet de purifier un flux gazeux d'un circuit de pile à combustible en faisant circuler ce flux dans un compartiment supérieur d'un boîtier disposant d'une entrée et d'une sortie, le procédé comportant les étapes consistant essentiellement à :
- fournir un premier composant de boîtier, de préférence sous forme de bol, disposant d'un fond et d'une extrémité supérieure annulaire délimitant une ouverture (O) ;
- monter intérieurement, dans le premier composant de boîtier et de préférence par insertion au travers de l'ouverture, un organe de cloisonnement qui peut inclure une plaque (sous forme d'une pièce ou de plusieurs composants de plaque) pour permettre de séparer le compartiment supérieur d'un compartiment inférieur, le compartiment inférieur destiné à la collecte du liquide pouvant être par exemple délimité par le fond à l'issue du montage, plusieurs orifices de la plaque permettant de faire passer (sous l'effet de la gravité) des gouttelettes de liquide du compartiment supérieur vers le compartiment inférieur ;
- mettre en place la sortie dans le boîtier, sous forme d'un conduit avec une portion intérieure du conduit qui fait saillie intérieurement dans le boîtier, en direction du fond ;
- disposer l'entrée dans le boîtier pour permettre d'amener un flux brut d'hydrogène dans le compartiment supérieur de façon tangentielle, autour de la portion intérieure du conduit et en regard d'une surface d'impaction agencée autour du conduit avec un espacement, de préférence en recouvrant ou en étant formée par une paroi latérale du premier composant de boîtier ;
avec dans ce procédé la solidarisation d'une collerette ou gouttière à un deuxième composant de boîtier :
- en formant ou connectant la collerette ou gouttière sur le bas de la portion intérieure du conduit, pour former un rebord saillant extérieur et en rendant le conduit solidaire du deuxième composant de boîtier qui est spécialement adapté pour constituer une partie d'obturation ou couvercle recouvrant l'extrémité annulaire pour fermer l'ouverture.

Typiquement dans ce procédé, une connexion étanche aux gaz est réalisée entre le deuxième composant de boîtier et le premier composant de boîtier, pour constituer ledit boîtier du dispositif, de sorte à ce que :
- le conduit communique avec le compartiment supérieur, par un débouché axial de la portion intérieure, laquelle s'étend suivant un axe longitudinal ; et
- la collerette ou gouttière définit un rebord en saillie radialement vers l'extérieur par rapport au conduit, en présentant une surface annulaire, en regard de la plaque, qui s'étend radialement jusqu'à un bord externe, de préférence en remontant en direction dudit bord externe.

L'assemblage limite le nombre de composants, sans besoin de pièce mobile ou mécanisme complexe dans le dispositif de séparation. Le conduit peut être disposé de façon compacte et l'encombrement en hauteur peut être optimisé tout en ayant des sections de passage complètement équivalentes ou identiques pour le débouché radial de l'entrée et le débouché axial permettant l'évacuation.
La portion intérieure du conduit peut être l'unique partie saillante vers le bas depuis la partie d'obturation et/ou l'unique voie de circulation axiale débouchant dans le compartiment supérieur. Le pourtour de cette portion intérieure peut être accessible/découvert (au moins dans la région supérieure du compartiment supérieure, adjacente à la partie d'obturation), de sorte que le flux gazeux brut amené tangentiellement par le débouché radial intérieur de l'entrée peut faire le tour de et directement longer cette portion intérieure, en circulant dans l'espace périphérique annulaire délimité, sur l'intérieur, uniquement par la surface de la portion intérieure du conduit (surface préférentiellement cylindrique).

La collerette (formant gouttière ou retenue annulaire) peut, lors de l'étape de solidarisation, être disposée autour d'une extrémité du conduit ou formée sur une circonférence extérieure du conduit en position adjacente à cette extrémité du conduit. Un clippage ou une soudure permet par exemple de former un contact annulaire (circonférentiel) qui est de préférence continu et étanche à l'eau. Il est également possible de mouler directement la collerette.

Dans le procédé, l'étape de connexion étanche peut comporter une fixation étanche d'une pièce formant le conduit (pour l'évacuation du flux gazeux épuré), avant de solidariser la collerette ou gouttière au conduit, dans le deuxième composant de boîtier en insérant le conduit au travers d'un orifice de montage prévu dans le deuxième composant de boîtier. Par exemple, l'orifice de montage a un diamètre intérieur qui est supérieur à un diamètre du débouché axial du conduit.
La collerette peut disposer d'une circonférence intérieure qui a un diamètre interne égal au diamètre (interne) du conduit à l'extrémité inférieure, de sorte que la collerette/gouttière ne réduit pas la section de passage prévu au niveau du débouché axial par lequel s'évacue le gaz épuré, hors de la chambre de séparation.

Selon un autre aspect, il est proposé une utilisation, pour la séparation eau-gaz (séparation d'eau dans un flux gazeux, en particulier dans un flux gazeux déchargé d'une pile à combustible, le gaz pouvant être de l'air ou de l'hydrogène), d'un couvercle avec un conduit muni d'un rebord externe, annulaire, le couvercle constituant un composant de boîtier d'un séparateur d'eau pour pile à combustible, le rebord externe étant formé sur une sortie de flux gazeux portée par le couvercle, la sortie étant en communication avec une chambre de séparation du séparateur d'eau où est réalisée une circulation tangentielle d'un flux gazeux à épurer depuis une entrée débouchant latéralement dans ladite chambre par un débouché intérieur d'entrée, de sorte que ce flux tourne autour du conduit constitutif de la sortie, l'eau séparée pouvant être collectée sur un fond formé comme une extrémité inférieure du séparateur à l'opposé du couvercle, utilisation dans laquelle le rebord externe est :
- sous la forme d'une collerette ou gouttière, de sorte que le rebord externe est en saillie radialement vers l'extérieur par rapport au conduit, la collerette ou gouttière étant disposée autour d'une extrémité inférieure du conduit ou formée sur une circonférence extérieure du conduit en position adjacente à l'extrémité inférieure du conduit ; et
- porté par le couvercle du séparateur d'eau, plus bas que le débouché intérieur d'entrée, de sorte que la circulation tangentielle est réalisée, autour du conduit définissant un axe longitudinal, en partie dans une zone axialement délimitée entre la collerette ou gouttière d'une part et une partie radiale d'obturation, appartenant au couvercle, depuis laquelle le conduit fait saillie vers le bas dans la chambre de séparation.

L'agencement du couvercle avec le conduit à collerette/gouttière permet un assemblage simple, d'une part, et optimise la séparation d'autre part en permettant un mode de séparation tangentiel du fait de l'extension du conduit en saillie sous la partie d'obturation. Le flux gazeux peut donc être mis en rotation autour du conduit, et on limite l'effet indésirable d'aspiration d'eau via le conduit des gouttelettes ou quantités d'eau ayant pu s'accumuler en coulant le long du conduit, en favorisant un entraînement de cette eau dans les tourbillons qui tournent autour de l'axe longitudinal du conduit.

### Brève description des dessins

D'autres caractéristiques, détails et avantages apparaîtront à la lecture de la description détaillée ci-après, et à l'analyse des dessins annexés, sur lesquels :
la figure 1 illustre une unité de séparation d'eau liquide permettant une circulation tangentielle du flux gazeux, typiquement de l'air ou de l'hydrogène (H₂), autour du conduit de sortie qui fait saillie à l'intérieur du boîtier qui délimite par ailleurs un compartiment inférieur de collecte de l'eau liquide, formé sous un organe de cloisonnement.
la figure 2 illustre, par une vue en coupe longitudinale, un exemple de conduit constitutif de la sortie, pourvu d'une collerette à effet de gouttière pour faire ruisseler des gouttelettes d'eau loin du débouché axial intérieur du conduit.
la figure 3A est une vue assez similaire à celle de la figure 1, montrant l'entrée de gaz décalée sur un côté par rapport à un axe central du boîtier pouvant être confondu avec l'axe longitudinal du conduit de sortie.
la figure 3B montre, par une vue en coupe passant par l'axe longitudinal du conduit, le bas de la chambre de séparation et le compartiment inférieure contenant le liquide séparé, avec un système de purge de liquide par le bas.
la figure 4 est une vue de modélisation en coupe, illustrant les lignes de flux dans la chambre de séparation d'eau, avec des indications de vitesse du gaz selon les zones de circulation autour de la portion intérieure du conduit de sortie.
la figure 5 montre le dispositif de séparation avec un aperçu de l'intérieur pour illustrer des trajectoires du gaz dans le compartiment supérieur pouvant former la chambre de séparation, ici avec une ligne d'évacuation d'eau schématiquement illustrée.

### Description des modes de réalisation

Il est exposé ci-après, de façon détaillée, plusieurs exemples de modes de réalisation non limitatifs. Sur les différentes figures, des références identiques indiquent des éléments identiques ou similaires.

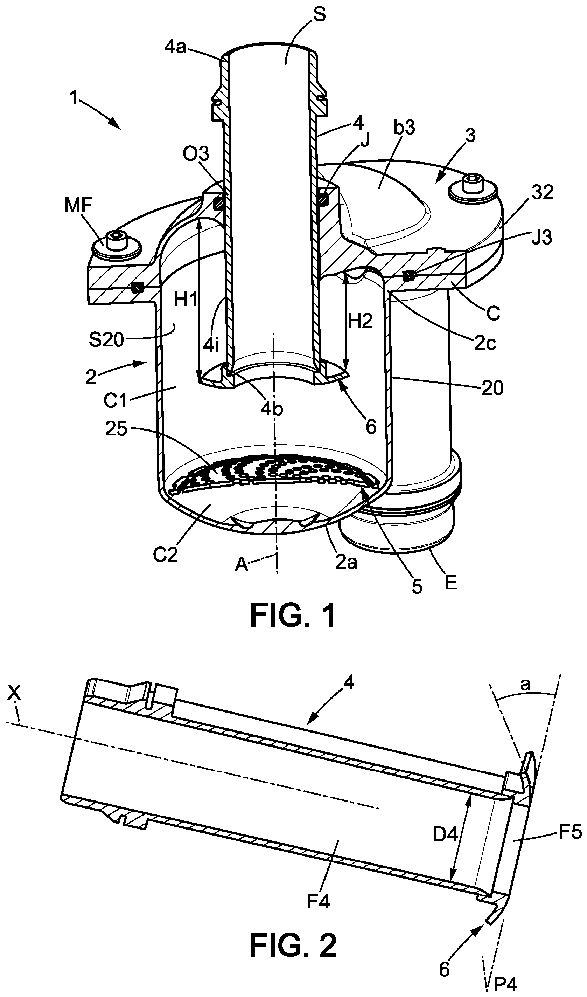

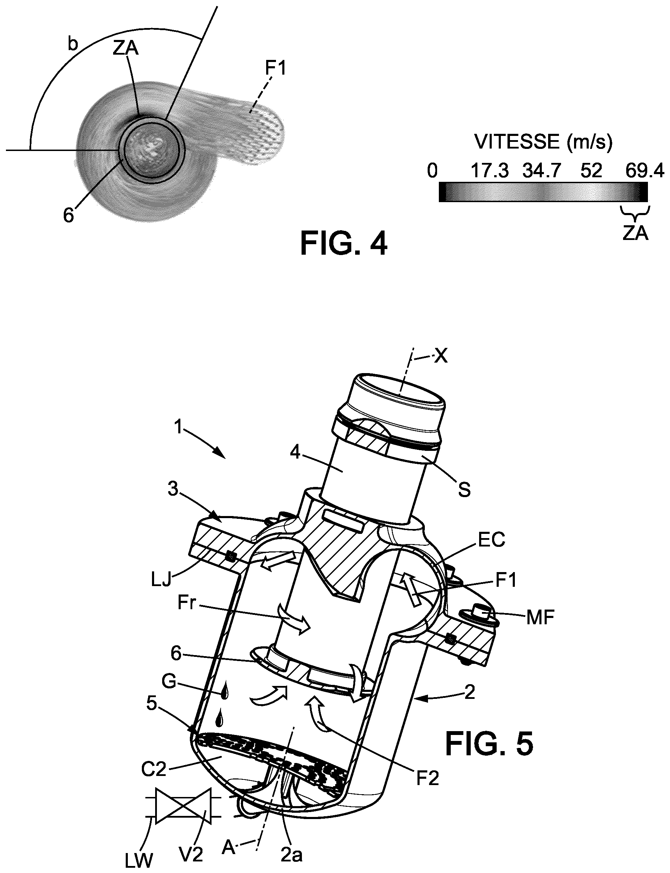

En référence aux figures 1, 3A-3B et 5, il est montré une unité ou dispositif 1 de séparation de liquide (eau liquide en particulier) pouvant être livré comme une unité préassemblée, prête à se connecter à deux conduites (flexibles ou non) :
- l'une pour l'amenée d'un flux gazeux, qui inclut par exemple l'air ou l'hydrogène (H₂),
- l'autre pour évacuation du gaz épuré.
En outre, une ligne de circulation d'eau liquide (visible en figure 5) peut être prévue pour permettre un drainage du côté d'un fond 2a du dispositif 1.

Le boîtier du dispositif 1, inclut un premier composant 2 tel qu'un bol ou analogue, et un couvercle 3 permettant de former une partie fonctionnelle appelée partie d'obturation. Un conduit 4, qui s'étend d'une extrémité supérieure 4a à une extrémité inférieure 4b, peut être portée par la partie d'obturation, par exemple en faisant saillie vers l'extérieur pour permettre un raccordement à l'extrémité supérieure 4a. Ce conduit 4 fait saillie intérieurement dans le boîtier, de sorte que l'extrémité inférieure se situe sur une portion intérieure 4i du conduit 4.
Sur la figure 1, il est présenté le cas non limitatif où le fond 2a et la paroi latérale 20 font partie de la même pièce ou du même composant (premier composant 2). Bien entendu, le premier composant 2 peut aussi être conçu différemment, pas forcément en une seule pièce : par exemple en ayant une structure tubulaire sur laquelle se raccorde un fond conçu séparément, ou encore en intégrant la partie d'obturation et la paroi latérale 20, éventuellement en résultant d'un assemblage de pièces. Dans tous les cas, il peut être prévu que la paroi latérale 20 s'étende autour de la portion intérieure 4i avec un espacement, par exemple un espacement qui est égal ou qui dépasse un diamètre d'un débouché radial de l'entrée E du boîtier, où l'entrée débouche à l'intérieur du boîtier.

Le dispositif 1 de séparation est à circulation tangentielle, avec une disposition adéquate du débouché radial intérieur de l'entrée E par rapport à la portion intérieure 4i du conduit 4. En référence aux figures 1, 3A-3B et 5, on peut voir que l'entrée E permet une admission à l'opposé de la partie d'obturation, tout en débouchant intérieurement (dans un volume intérieur V) par un débouché radial permettant la circulation tangentielle du flux gazeux dans une zone supérieure du volume intérieur V. L'entrée E peut être délimitée/formée par un conduit coudé, avec une zone coudée EC, permettant de réaliser une admission du flux gazeux par le bas, à l'opposé de l'orientation d'une sortie S qui fait ressortir le flux épuré par le haut, typiquement au-delà de la partie d'obturation du couvercle 3.

### Compartimentation du volume intérieur

La partie d'obturation, lorsqu'elle est formée comme deuxième composant ou couvercle 3, permet de délimiter par le haut une chambre de séparation du dispositif 1. Le boîtier délimite un volume intérieur V et peut disposer d'une paroi latérale 20 qui s'étend autour d'un axe central A (formant typiquement l'axe central du boîtier). Un organe de cloisonnement 5 peut être prévu dans le volume intérieur, tandis que la partie intérieure 4i d'un conduit 4 s'étend aussi dans ce volume intérieur V, en faisant face par son extrémité inférieure 4b à l'organe de cloisonnement 5. Le volume intérieur V peut se décomposer en plusieurs sous-volumes ou compartiments, avec par exemple un compartiment supérieur C1 où se forment les tourbillons autour de la portion intérieure 4i du conduit 4 et un compartiment inférieur C2 permettant à l'eau de s'accumuler sur le fond 2a.

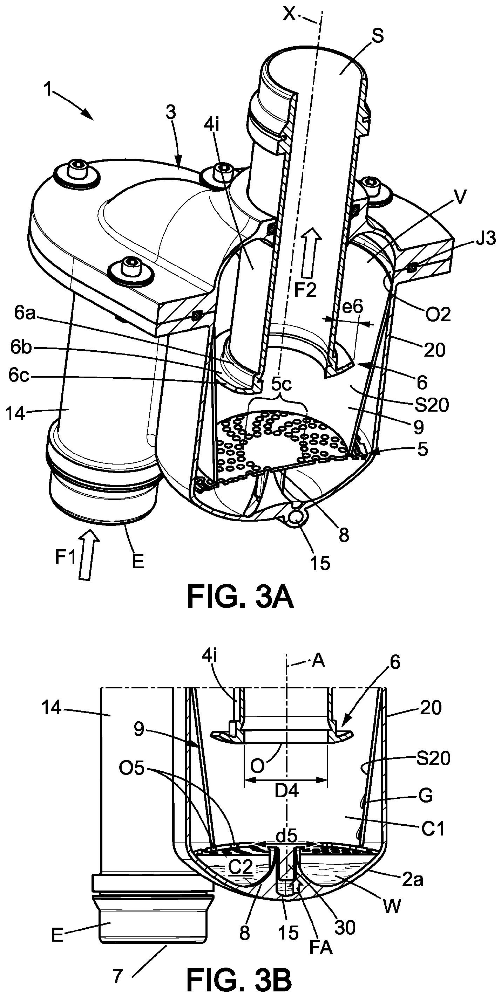

Une plaque 25 ou partie similaire ajourée de l'organe de cloisonnement 5 peut être disposée fixement pour recouvrir le fond 2, de sorte que le compartiment inférieur C2 est délimité entre le fond 2a et la plaque 25, sous le compartiment supérieur C1. La chambre de séparation s'étend donc au-dessus de la plaque 25 et plusieurs orifices O5 de cette plaque permettent aux gouttelettes G d'atteindre la zone de collecte dans le compartiment inférieure C2.
Les orifices O5 sont distribués sensiblement sur toute la plaque à l'exception d'une zone centrale 5c, visible notamment sur les figures 3A et 5, éventuellement avec des espacements progressifs par rapport à l'axe central A. Une distribution des orifices O5 peut être hélicoïdale, avec des rangées d'orifices O5 non rectilignes (mais qui suivent une courbe, comme dans le cas de la figure 3A).

Dans des réalisations, chacun des orifices O5 peut présenter une section de passage calibrée, par exemple avec un diamètre qui est compris entre 3 et 6 mm, de préférence entre 3,4 et 5,5 mm. Au moins quatre dispositions sont prévues pour ces orifices O5, en ayant des premiers orifices, correspondant à une première disposition, plus proches de la zone centrale 5c avec un même écartement radial par rapport à l'axe A, puis plusieurs autres dispositions successives pour chacune desquelles les orifices O5 ont le même espacement radial. Ainsi, on retrouve des orifices proches de la paroi latérale 20 et d'autres orifices éloignés de la paroi latérale 20. Dans une configuration avec bombement de la plaque 25, au moins les orifices distribués de façon annulaire à proximité de la zone centrale 5c, avec la première disposition, sont réhaussés du fait du bombement par rapport à d'autres orifices.

### Intégration d'une collerette/gouttière sur la portion intérieure de la sortie

Quelle que soit la manière de délimiter le volume intérieur V, le conduit 4 peut se dresser sensiblement verticalement en direction du fond 2a, en ayant une face latérale de la portion intérieure 4i qui se situe au même niveau de hauteur que le débouché intérieur de l'entrée, par lequel un flux gazeux brut F1 arrive sensiblement horizontalement ou tout du moins de façon tangentielle. Le conduit 4 débouche axialement par le bas dans la chambre de séparation pour permettre d'évacuer le gaz épuré parvenu dans une zone basse et centrale du compartiment supérieur C1. Ce conduit 4 peut être coaxial par rapport à une délimitation extérieure latérale (paroi tubulaire) délimitant le compartiment supérieur C1, par exemple en ayant la portion intérieure 4i du conduit qui s'étend autour d'un axe longitudinal X, en restant axialement espacé de la partie centrale 5c de la plaque 25 d'une part, et en conservant un espace régulier ou constant par rapport à la paroi latérale 20. La partie centrale 5c est de préférence non ajourée, pour éviter des effets indésirables d'aspiration verticale d'eau collectée dans le compartiment inférieur C2. L'axe longitudinal X de la portion intérieure 4i peut être confondu avec l'axe central A.

Sur ou près de son extrémité inférieure 4b, le conduit 4 inclut ou porte une collerette ou gouttière 6 formée sur tout ou partie de la circonférence de la portion intérieure 4i, typiquement sans réduire la section de passage axiale autour l'axe longitudinal X qui est formée au bas du conduit 4. Un rebord externe est alors formé qui est espacé de la surface d'impaction S20 qui délimite la compartiment supérieur C1, en formant la circonférence extérieure de la chambre de séparation. Avec un tel espacement qui est circonférentiel, la collerette ou gouttière 6 n'empêche pas les tourbillons formés loin de la portion intérieure 4i, le long la surface d'impaction S20, de présenter une trajectoire descendante. A l'inverse, le long/tout près de la portion intérieur 4i du conduit 4, un effet de guidage de la gouttière permet de :
- limiter la composante descendante des trajectoires de flux gazeux, ce qui permet d'obtenir des tourbillons et des trajectoires de circulation tangentielle avec un effet d'accélération (cf. flèche Fr, figure 5), d'une part ;
- et de repousser radialement vers l'extérieur les gouttelettes d'eau ayant pu tomber sur la gouttière 6, d'autre part.

En référence aux figure 2, 3A et 3B, la collerette ou gouttière 6 définit un rebord en saillie radialement vers l'extérieur par rapport au conduit 4. Elle peut présenter un bord externe circulaire continu, par exemple de diamètre au moins 6 ou 7 mm supérieur au diamètre externe de la portion intérieure 4i.
Plus généralement, par rapport à une surface extérieure cylindrique du conduit 4, la collerette ou gouttière 6 a une extension radiale e6. Cette extension radiale e6, mesurée perpendiculairement à l'axe central A, peut être supérieure à une épaisseur du conduit 4 et/ou supérieure ou égale à 6 ou 7 mm.

Dans des options, la gouttière 6 peut être disposée autour d'une extrémité inférieure 4b du conduit 4, dans des réalisations simples du conduit 4, qui est dépourvu de nervures ou reliefs extérieurs.
Dans certaines réalisations, avec une structure simple du conduit 4 ou non (par exemple en incluant des nervures), des reliefs ou nervures, éventuellement hélicoïdales peuvent former une transition entre une surface extérieure du conduit 4 et la gouttière 6. On comprend que la gouttière 6 peut être une pièce ou partie rapportée formée sur une circonférence extérieure du conduit en position adjacente à l'extrémité inférieure 4b du conduit 4. Cette gouttière 6 peut constituer un embout sans partie d'insertion venant dans le creux du conduit 4.

Sachant que le conduit 4 permet d'obtenir un diamètre D4 pour la zone du débouché axial du conduit 4 muni de la collerette ou gouttière 6, il peut être prévu de prévenir tout écoulement ascendant rectiligne de gouttelettes d'eau G se trouvant à l'aplomb du/sous conduit 4. Pour cela, la partie centrale 5c de la plaque 25, non ajourée, peut présenter un diamètre d5 inférieure au diamètre D4 tout en dépassant la moitié de ce diamètre D4.

Sur l'exemple non limitatif de la figure 4, le conduit a une surface interne cylindrique et un embout annulaire permet de former la gouttière 6. Une face F5 interne de la gouttière 6 a par exemple un diamètre égal au diamètre interne D4 de la portion intérieure 4i qui constitue la portion en saillie, dans le compartiment supérieur C1, du conduit 4. Une extrémité avec relief, bourrelet ou région barbée peut être prévue à l'extrémité 4a, opposée au débouché intérieur axial formé sur l'extrémité 4b inférieure orientée en direction du fond 2a. Le débouché axial intérieur O peut être sous forme d'ouverture dans un plan P4 (plan d'ouverture qui peut être horizontal ou parallèle à la plaque 25). Le plan P4 peut être un plan tangent à la gouttière 6, comme dans le cas des figures 1 et 3A-3B notamment lorsque la gouttière 6 est formée d'une seule pièce qui s'étend de manière annulaire autour d'un creux central permettant le passage du flux épuré F2 rejoignant le conduit 4.

La portion intérieure 4i peut être l'unique voie de circulation axiale formée comme une projection/saillie vers le bas depuis la partie d'obturation. Le conduit 4 peut aussi définir l'unique portion saillante axialement vers l'extérieur pour permettre à l'extrémité 4a de raccorder une conduite complémentaire/compatible.
Le conduit 4 peut directement communiquer avec le compartiment supérieur C1, en utilisant la totalité de sa section de passage qui n'est pas obturée par la collerette ou gouttière 6. La région centrale du fond 2a se situe à l'aplomb du débouché axial intérieur O permettant cette communication.

Afin d'éviter de créer des turbulences près du bord externe 6c de la gouttière 6, ce bord externe 6c peut être aminci ou formé dans une lèvre 6b qui rejoint un tronçon d'embout, aligné avec la portion intérieure 4i du conduit 4, qui est plus épais. L'épaisseur dans la lèvre 6b (de forme annulaire dans le cas des figures 2 et 3A-3B) peut être égale ou du même ordre de grandeur que l'épaisseur du conduit 4.
La collerette ou gouttière 6 peut inclure un corps 6a tubulaire, ici cylindrique, pour le raccordement radial étanche sur la circonférence de la portion intérieure 4i. Le haut du corps 6a peut former un premier épaulement annulaire adjacent au conduit 4, tandis que la lèvre 6b peut se raccorder au corps en formant une gorge ouverte par le dessus. Le corps 6a et la lèvre 6b ont un format de chapeau sans fond, avec la lèvre 6b qui forme le bord transversalement par rapport à la direction du corps 6a.

En référence à la figure 2, la collerette ou gouttière 6 est pourvue d'une surface annulaire inférieure, en regard de la plaque 25, qui s'étend radialement jusqu'au bord externe 6c en remontant en direction dudit bord externe 6c. La surface annulaire peut remonter progressivement au fur et à mesure qu'on s'approche du bord externe 6c. Le cas échéant, la collerette ou gouttière 6 peut être conçue avec un angle de pente a pour la lèvre. Cet angle, qui est ici mesuré depuis l'extérieur et par rapport au plan P4 de l'ouverture/accès inférieur du creux central, peut être compris entre 10 et 55°, de préférence entre 15 et 45°. Avec cet angle a, la lèvre peut délimiter une gorge d'écoulement suivant une direction circonférentielle, où des gouttelettes d'eau peuvent être reçues sans continuer leur descente. Au contraire, une remontée est nécessaire, en suivant la pente d'angle a.

### Fonctions de déviation et effets d'accélération

En référence aux figures 1, 3A-3B et 5, le flux gazeux brut F1, entrant dans le compartiment supérieur C1, peut être orienté pour une circulation entre la portion intérieure 4i et la paroi 20, à l'aide d'un creusement ou cavité d'entrée délimitée par/sous le couvercle 3, typiquement sous une projection axiale creuse ou bosse creuse b3, ce qui permet de former une zone coudée EC (visible en figures 1 et 5) lorsque l'entrée E s'étend depuis une extrémité inférieure 7 d'un conduit extérieur 14 pouvant être formé parallèlement à la paroi latérale 20, possiblement avec un écartement en rejoignant le couvercle 3. Plus largement, une zone coudée EC peut être prévu pour :
- orienter correctement le flux F1 dans le compartiment intérieur,
- et permettre un raccordement aisé d'une conduite sur l'entrée E, qui est typiquement d'extension axiale/parallèle au conduit 4.

Dans l'exemple non limitatif de la figure 5, il est prévu un tronçon tournant de conduit, délimité par le dessus par la projection axiale creuse ou bosse creuse b3 qui fait partie de la partie d'obturation (dans le couvercle 3). Ainsi, ce flux F1 n'est pas orienté de façon centripète vers la portion intérieure 4i, mais de façon tangentielle avec une trajectoire tournante, sensiblement circulaire par exemple autour de la portion intérieur 4i.
Afin de guider progressivement une descente du flux gazeux, la partie d'obturation du couvercle 3 peut présenter un profil descendant, depuis la zone coudée EC ou zone similaire formant le débouché radial intérieur de l'entrée E. Comme bien visible en figure 1, la projection axiale creuse b3 peut permettre de délimiter une distance ou hauteur maximale H1, entre un tronçon du bord externe 6c et la partie d'obturation, qui est supérieure à la distance ou hauteur H2 obtenue dans une zone diamétralement opposée. Typiquement, le couvercle 3 est moins bombé ou ne présente plus de projection dans cette zone diamétralement opposée au débouché radial intérieur de l'entrée E.

En vue de dessus, la circulation du flux gazeux peut se faire dans le sens anti-horaire. En référence à la figure 4, on peut voir les lignes de flux dans le compartiment supérieur C1, avec des indications de vitesse du gaz selon les zones de circulation autour de la portion intérieure 4i du conduit 4. Au moins sur un secteur angulaire b important, qui dépasse typiquement 90°, il est observé un effet d'accélération, significatif, pour la vitesse linéaire mesurée le long/au plus près de la portion intérieure 4i. Dans la zone d'accélération ZA, les vitesses s'élèvent à plus de 55 ou 60 m/s. Dans le même secteur angulaire, dans des zones plus proches de la surface d'impaction S20, les vitesses sont en moyenne légèrement supérieures ou égales à 50 m/s, alors que les vitesses d'admission par la zone coudée EC sont inférieures à 35 m/s.

La collerette ou gouttière 6, a un effet bénéfique pour l'accélération et minimise le réentraînement de gouttelettes d'eau. La réduction de hauteur (H1>H2) semble aussi limiter les pertes de charge : la décroissance progressive de hauteur, depuis la plus grande hauteur H1, apparaît avoir un effet bénéfique pour faciliter le transfert de gouttelettes de la gouttière 6 vers la périphérie extérieure du compartiment supérieur C1, en tirant profit de tourbillons qui écartent ces gouttelettes radialement vers l'extérieur sans effet indésirable d'entraînement rapide vers le dessous du conduit 4.

Bien que les dessins montrent le cas d'un conduit rigide extérieur 14, porté par le couvercle 3 du boîtier, pour une première circulation ascendante du flux gazeux en amont de la chambre de séparation, d'autres conceptions peut permettent l'amenée du flux gazeux brut F1. Dans des variantes, l'entrée E peut permettre une circulation descendante. Dans ces cas avec une entrée agencée de façon axiale pour son premier tronçon, il peut être prévu de former le premier tronçon de l'entrée E, parallèlement à l'axe central A, tandis que le tronçon de l'entrée communiquant latéralement avec le compartiment supérieur C1 forme un deuxième tronçon de l'entrée qui complète le premier tronçon en étant agencé transversalement par rapport à l'axe central A.

Le conduit 4, définissant la sortie S, permet une deuxième circulation ascendante du flux gazeux en aval de la chambre de séparation, en s'étendant autour d'un axe longitudinal X (parallèle ou confondu avec l'axe central A), de sorte que la deuxième circulation ascendante est parallèle à la première circulation (qu'elle soit ascendante ou descendante, dans le premier tronçon), en démarrant depuis le débouché axial O qui peut se situer entièrement plus bas que le deuxième tronçon de l'entrée E. Ce décalage axial permet d'obtenir des tourbillons tournants entre le deuxième tronçon de l'entrée E et le niveau de la gouttière 6.

### Exemples d'assemblage

L'entrée E peut être distribuée en deux tronçons, dont l'un est inclus dans le composant 2 lorsqu'une bride C annulaire raccorde fixement le conduit rigide externe 14 et la cuve ou bol. Pour compléter le conduit rigide externe 14 formé comme premier tronçon, il prévu un deuxième tronçon dans le couvercle 3, qui présente aussi un flasque ou bride 32. Le deuxième tronçon définit la zone coudée EC dans le cas illustré sur les figures 1 et 5. Un plan de jonction peut être obtenu en fixant le couvercle 3, par le dessous de la bride 32, sur le dessus de la bride C. Un joint J3 assure par exemple l'étanchéité de la connexion, sous la bride C du couvercle 3.

Plus largement, la fixation du couvercle 3 sur le corps ou composant de boîtier 2 est réalisée de façon étanche aux gaz (notamment étanche à l'oxygène et à l'hydrogène), en incluant un ou plusieurs organes d'étanchéité J3 et avec un serrage permis par des moyens de fixation FM adaptés.
Dans les réalisations illustrées, on observe que l'ancrage du composant ou couvercle 3 par les vis ou moyens de fixation MF, par exemple métalliques, permet d'assurer une disposition plate d'une bride C du couvercle 3 où peut être réalisée l'étanchéité par le joint J3, dans une zone décalée intérieurement par rapport à zone de marge/extérieure traversée par les vis ou moyens de fixation MF. La hauteur du bol formant la partie de délimitation de la chambre de séparation, (bol constitué par le premier composant 2) peut être réduite en adaptant la longueur du conduit 4 et/ou en prévoyant un bombement/projection axiale b3 permettant de rehausser la zone de jointure étanche avec le joint J, qui vient s'appuyer sur le conduit 4 par l'extérieur de celui-ci. En variante, le conduit 4 peut être soudé pour être solidarisé à la partie d'obturation (donc au couvercle 3), ou encore le conduit 4 peut être inclus dans une pièce moulée formant tout ou partie du couvercle 3 (conduit intégré dans la partie d'obturation dans ce cas).

Dans des réalisations, la fixation du couvercle 3 peut être permanente et/ou réalisée par une soudure, typiquement en supprimant le joint J3 dans le cas où une soudure (annulaire) est réalisée. Optionnellement, un seul joint suffit ou même le boîtier (complet) qui délimite le volume intérieur V est obtenu sans joint.

Avant d'assembler le couvercle 3 en tant que deuxième composant, sur le premier composant 2, afin d'obtenir la ligne annulaire de jonction étanche LJ, on peut prévoir de disposer le conduit 4 avec la collerette ou gouttière 6, suivant un agencement prédéterminé pour ajuster la hauteur H1. En référence aux figures 1 et 2, on peut réaliser une fixation étanche d'une pièce formant le conduit 4 sur la partie d'obturation (appartenant au couvercle 3), avant de solidariser la collerette ou gouttière 6 au conduit 4, ce qui la rend également solidaire de ce deuxième composant. Le diamètre extérieur de la portion intérieure 4i permet d'in insérer le conduit 4 au travers d'un orifice de montage O3 prévu dans le deuxième composant de boîtier, ici centralement dans le couvercle 3 dans le cas non limitatif illustré. Bien entendu, l'orifice de montage O3 a un diamètre intérieur qui est supérieur au diamètre D4. Ici, cet orifice de montage O3 ne reçoit qu'une structure monotube constituant le conduit 4. Aucune jupe intérieure du couvercle 3 ne vient faire barrière entre le débouché radial intérieur de l'entrée 4 et la portion intérieure 4i, une fois le couvercle 3 installé sur le composant de boîtier 2.

Dans certaines options, un insert annulaire est déposé dans le volume intérieur Vn pour former la surface d'impaction S20 latérale, laquelle recouvrant intérieurement la paroi latérale 20.

Le dispositif de séparation 1 peut former un agencement compact en hauteur, limitant la perte de charge et efficace pour la récupération des gouttelettes de liquide, ce qui peut avantageusement éviter des entraînements d'eau, éviter des turbulences à proximité du débouché axial de la sortie.

L'assemblage peut permettre une certaine versatilité dans le choix du ou des composants 2 qui s'assemblent avec le couvercle 3. La collerette ou gouttière 6 peut être obtenue et agencée dans une phase de conception du couvercle 3, avec le rebord externe déjà en place en formant un relief annulaire jusqu'au bord externe 6c.
Le rebord externe de la collerette ou gouttière 6 est ainsi préalablement formée sur l'extrémité 4b inférieure du conduit 4 ou sur une circonférence extérieure du conduit en position adjacente à l'extrémité 4b), en disposant/montant une pièce constitutive de ce rebord externe/gouttière sur le couvercle 3 du dispositif 1 séparateur d'eau, plus bas que la zone coudée EC ou débouché intérieur d'entrée, de sorte que la circulation tangentielle va pouvoir être réalisée, autour du conduit 4. L'agencement de couvercle avec le conduit et la gouttière 6 peut donc être avantageusement utilisé dans un dispositif 1 de séparation d'eau, sans multiplier le nombre de pièces à assembler. En outre, les pièces prévues peuvent avoir une structure simple, de sorte que la fabrication du dispositif 1 ne requiert pas de moule très complexe.

### Drainage

Dans certaines, réalisations, un orifice ou conduit de purge 15 est prévu et une vanne V2 (par exemple une vanne papillon) associée à ce conduit de purge LW d'eau liquide peut s'ouvrir quand la quantité d'eau est trop importante. Le cas échéant, la sortie d'eau liquide peut suivre un phénomène mécanique (passif). Un effet de poussée d'Archimède (force FA sur la figure 3B) peut permettre le soulèvement d'une projection ou tige 30, saillante vers le bas et solidaire de la plaque 5. Une cavité, pour le déplacement axial (typiquement vertical) d'une telle tige 30 ou organe de guidage similaire, peut être formée par un support ou pilier creux 8 prévu dans le fond 2a du composant 2. Ce pilier creux 8 peut faire directement partie du fond 2a, en étant formé d'une seule pièce avec le composant 2. En variante, la fonction de support de la plaque 25 ou de l'organe de cloisonnement 5 peut résulter de reliefs ou épaulement intérieurs.

Dans des options utilisant une électrovanne, le seuil d'ouverture peut être choisi de façon à que l'eau collectée ne remonte pas jusqu'à la plaque 25.
Quel que soit le mode de contrôle (passif ou actif) pour libérer un ou plusieurs orifices d'évacuation 15 évacuer l'eau hors du compartiment inférieur C2,
L'eau collectée W, accumulée dans le compartiment inférieur C2, peut ainsi être évacuée.

Pour délimiter le compartiment inférieur C1, la plaque 25 peut être d'épaisseur donnée et à surface supérieure convexe. La plaque 25 est optionnellement bombée vers le haut, de sorte que la partie centrale 5c non ajourée est plus haute qu'une portion de marge annulaire de la plaque 25.

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

L'unité ou dispositif de séparation1 peut prévoir la présence d'un revêtement ou élément 9 d'insertion tel qu'une toile ou support rigide avec toile, cet élément 9 pouvant être formé séparément du corps/composant 2. Cette conception peut simplifier la production du dispositif 1, puisque l'élément 9 n'est pas soudé ou lié directement sur le composant 2, mais sur une autre pièce constitutive du support (séparément conçu).
Un processus de soudage sur le conduit 4 de la collerette ou gouttière 6 peut aussi être prévu, ce qui peut constituer une solution peu coûteuse et plus rapide, sans complexité de l'outil de soudage par exemple. Cela peut éventuellement permettre de rendre le dispositif plus robuste.

Par ailleurs, bien que le conduit 4 a été présenté comme formant un canal unique, sans cloisonnement et sans élément de déviation, il peut en variante présenter des reliefs, guides ou éléments de déviation, ou éventuellement au moins une partie de cloison longitudinale. Il peut aussi présenter une extrémité crénelée ou ondulée, éventuellement en emboîtement avec la collerette ou gouttière 6. La partie saillante de cette dernière peut éventuellement former une ou plusieurs ondulations, par exemple avec des nervures radiales séparées entre elles par des zones de gorge.

La connexion de la partie d'obturation ou deuxième composant a été illustrée comme étant réalisée directement sur le premier composant 2, avec le recours à au moins un joint. Dans des variantes, la connexion étanche peut être obtenue en plaçant une interface de liaison, par exemple en utilisant une pièce intercalaire (par exemple annulaire) interposée entre ces deux composants.

## Revendications

1. Dispositif (1) de séparation de liquide pour flux gazeux d'un circuit de pile à combustible, le dispositif comprenant un boîtier délimitant un volume intérieur (V) qui inclut une chambre de séparation, le dispositif (1) comprenant :
- un composant de boîtier (2), pourvu d'une paroi latérale (20) qui s'étend autour d'un axe central (A) ;
- une surface d'impaction (S20), latérale, délimitant la chambre de séparation ;
- une partie d'obturation, de préférence réalisée sous forme d'un couvercle (3), et permettant de recouvrir un dessus de la paroi latérale, ledit composant de boîtier (2) et la partie d'obturation appartenant au boîtier ;
- une entrée (E), pour amener un flux gazeux brut (F1) de façon tangentielle dans la chambre de séparation, de préférence perpendiculairement à l'axe central, et une sortie (S), l'entrée et la sortie étant prévues dans le boîtier;
dans lequel la partie d'obturation porte ou comporte un conduit (4) définissant la sortie (S) et incluant ou portant une collerette ou gouttière (6), le conduit (4) faisant saillie intérieurement par rapport à la partie d'obturation :
**caractérisé en ce que** le dispositif est un séparateur d'eau liquide qui comporte en outre :
- un organe de cloisonnement (5) qui inclut une plaque (25) avec plusieurs orifices (O5) pour délimiter la chambre de séparation par le bas, de sorte qu'un compartiment supérieur (C1) est formé par la chambre de séparation dans le volume intérieur (V) ; et
- un compartiment inférieur (C2) prévu entre un fond (2a) du boîtier et l'organe de cloisonnement (5), sous le compartiment supérieur (C1), le compartiment inférieur étant destiné à la collecte de l'eau liquide en étant délimité par ledit fond (2a) ;
**et en ce que** le conduit (4), qui est orienté vers le fond (2a) et communique avec le compartiment supérieur (C1) du volume intérieur (V) par un débouché axial (O), fait saillie axialement vers une région centrale du fond (2a) en restant axialement espacé d'une partie centrale (5c) de la plaque (25), sachant que la collerette ou gouttière (6), définit un rebord en saillie radialement vers l'extérieur par rapport au conduit (4) en étant disposée autour d'une extrémité inférieure (4b) du conduit (4) ou formée sur une circonférence extérieure du conduit en position adjacente à l'extrémité inférieure (4b) du conduit,
l'entrée (E) du boîtier communiquant latéralement avec le compartiment supérieur (C1), par un tronçon de l'entrée situé plus haut que le débouché axial (O) et plus haut que la collerette ou gouttière (6).

2. Dispositif selon la revendication 1, dans lequel la collerette ou gouttière (6) est pourvue d'une surface annulaire, en regard de la plaque (25), qui s'étend radialement jusqu'à un bord externe (6c) en remontant en direction dudit bord externe, de préférence en ayant ladite surface annulaire qui remonte progressivement au fur et à mesure qu'on s'approche dudit bord externe (6c).

3. Dispositif selon la revendication 1 ou 2, dans lequel l'entrée (E) débouche dans le volume intérieur (V) par un débouché radial permettant une circulation tangentielle du flux gazeux dans une zone supérieure du volume intérieur (V), l'entrée (E) étant délimitée par un conduit coudé permettant de réaliser une admission du flux gazeux par le bas, à l'opposé de l'orientation de la sortie (S) qui fait ressortit le flux épuré par le haut,
et dans lequel, afin de guider progressivement une descente du flux gazeux, la partie d'obturation présente un profil descendant, depuis le débouché radial intérieur de l'entrée (E).

4. Dispositif selon la revendication 1, 2 ou 3, dans lequel la paroi latérale (20) s'étend depuis un fond (2a) jusqu'à une extrémité annulaire (2c) disposant d'une ouverture (O), tandis que la partie d'obturation permet de recouvrir l'extrémité annulaire (2c) pour fermer l'ouverture (O),
et dans lequel le débouché radial est au moins en partie formé dans une projection ou excroissance de la partie d'obturation ou adjacent à la partie d'obturation, la partie d'obturation étant conçue et agencée pour permettre, au moins sur un secteur angulaire de 180° autour d'une portion intérieure (4i) du conduit (4), d'augmenter progressivement la hauteur ou distance axiale entre la collerette ou gouttière (6) et la partie d'obturation au fur et à mesure qu'on s'approche d'un secteur angulaire incluant le débouché radial de l'entrée.

5. Dispositif selon l'une quelconque des revendications précédentes, dans lequel les orifices (O5) ont une section de passage avec un diamètre qui est compris entre 3 et 6 mm, de préférence entre 3,4 et 5,5 mm.

6. Dispositif selon l'une quelconque des revendications précédentes, dans lequel le débouché axial (O) a un diamètre D4 correspondant à un diamètre interne du conduit (4),
dans lequel la partie centrale (5c) de la plaque (25), qui est une partie non ajourée, est traversée par l'axe central (A) et présente un diamètre d5,
et dans lequel la relation suivante est satisfaite : ½ < d5/D4 < 1.

7. Dispositif selon l'une quelconque des revendications précédentes, dans lequel il est prévu que l'espacement minimum de la collerette ou gouttière (6) par rapport à la surface d'impaction (S20), formant une périphérie/circonférence extérieure de la chambre de séparation, dépasse 25 mm.

8. Dispositif selon l'une quelconque des revendications précédentes, dans lequel la plaque (25) est à surface supérieure convexe ou est bombée vers le haut, de sorte que la partie centrale (5c), qui est non ajourée, est plus haute qu'une portion de marge annulaire de la plaque (25).

9. Dispositif selon l'une quelconque des revendications précédentes, dans lequel par rapport à une surface extérieure cylindrique du conduit, la collerette ou gouttière (6) a une extension radiale (e6), mesurée perpendiculairement à l'axe central (A), qui est :
- supérieure à une épaisseur du conduit (4), dont la section de passage est sensiblement constante ;
- et/ou supérieure ou égale à 6 mm tout en permettant à la collerette ou gouttière (6) d'être radialement espacée de la surface d'impaction d'une distance radiale au moins supérieure au double ou au triple de l'extension radiale de la collerette ou gouttière.

10. Dispositif selon l'une quelconque des revendications précédentes, comprenant un conduit rigide extérieur (14), porté par le boîtier, pour une première circulation ascendante du flux gazeux en amont de la chambre de séparation, le conduit rigide extérieur (14) formant un premier tronçon de l'entrée (E), parallèlement à l'axe central (A), tandis que le tronçon de l'entrée communiquant latéralement avec le compartiment supérieur (C1) forme un deuxième tronçon de l'entrée qui complète ledit premier tronçon en étant agencé transversalement par rapport à l'axe central (A),
dans lequel le conduit (4) définissant la sortie (S) est un conduit cylindrique, rigide, pour une deuxième circulation ascendante du flux gazeux en aval de la chambre de séparation, en s'étendant autour d'un axe longitudinal (X) parallèle ou confondu avec l'axe central (A), ce grâce à quoi la deuxième circulation ascendante est parallèle à la première circulation ascendante en démarrant depuis le débouché axial (O) qui se situe entièrement plus bas que le deuxième tronçon.

11. Procédé d'assemblage pour obtenir un dispositif (1) de séparation d'eau liquide selon l'une quelconque des revendications précédentes, qui permet de purifier un flux gazeux déchargé d'un circuit de pile à combustible en faisant circuler ce flux dans un compartiment supérieur (C1) d'un boîtier disposant d'une entrée (E) et d'une sortie (S), le procédé comportant les étapes consistant essentiellement à :
- fournir un premier composant de boîtier (2), de préférence sous forme de bol, disposant d'un fond (2a) et d'une extrémité supérieure annulaire (2c) délimitant une ouverture (O) ;
- monter intérieurement, dans le premier composant de boîtier (2) et de préférence par insertion au travers de l'ouverture (O), un organe de cloisonnement (5) qui inclut une plaque (25) pour permettre de séparer le compartiment supérieur (C1) d'un compartiment inférieur (C2), le compartiment inférieur (C2) destiné à la collecte de l'eau liquide étant délimité par ledit fond (2a) à l'issue du montage, plusieurs orifices (O5) de la plaque (25) permettant de faire passer sous l'effet de la gravité des gouttelettes d'eau du compartiment supérieur (C1) vers le compartiment inférieur (C2) ;
- mettre en place la sortie (S) dans le boîtier, sous forme d'un conduit (4) avec une portion intérieure (4i) du conduit qui fait saillie intérieurement dans le boîtier, en direction du fond (2a) ;
- disposer l'entrée (E) dans le boîtier pour permettre d'amener un flux gazeux brut (F1) dans le compartiment supérieur (C1) de façon tangentielle, autour de la portion intérieure (4i) du conduit (4) et en regard d'une surface d'impaction (S20) agencée autour du conduit (4) avec un espacement par rapport à cette surface d'impaction ;
**caractérisé en ce qu'**une collerette ou gouttière (6) est solidarisée à un deuxième composant de boîtier :
- en formant ou connectant la collerette ou gouttière (6) sur le bas de la portion intérieure (4i) du conduit (4) et en rendant le conduit (4) solidaire du deuxième composant de boîtier qui est spécialement adapté pour constituer une partie d'obturation ou couvercle (3) recouvrant l'extrémité annulaire (2c) pour fermer l'ouverture (O) ;
**et en ce qu'**une connexion étanche aux gaz est réalisée entre le deuxième composant de boîtier et le premier composant de boîtier (2), pour constituer ledit boîtier du dispositif (1), de sorte à ce que :
- le conduit (4) communique avec le compartiment supérieur (C1), par un débouché axial (O) de la portion intérieure (4i), laquelle s'étend suivant un axe longitudinal (X) ; et
- la collerette ou gouttière (6) définit un rebord en saillie radialement vers l'extérieur par rapport au conduit (4), en présentant une surface annulaire, en regard de la plaque (25), qui s'étend radialement jusqu'à un bord externe (6c), de préférence en remontant en direction dudit bord externe (6c).

12. Procédé d'assemblage selon la revendication 11, dans lequel l'étape de connexion étanche comprend une fixation étanche d'une pièce formant le conduit (4), avant de solidariser la collerette ou gouttière (6) au conduit (4), dans le deuxième composant de boîtier en insérant le conduit (4) au travers d'un orifice de montage prévu dans le deuxième composant de boîtier, l'orifice de montage (O3) ayant un diamètre intérieur qui est supérieur à un diamètre (D4) du débouché axial (O) du conduit (4),
et dans lequel la collerette ou gouttière (6) solidarisée au conduit est formée comme un embout du conduit (4) en recouvrant un bord axial inférieur du conduit (4).
